# EUROPEAN PATENT APPLICATION

(11) **EP 4 293 858 A1**
(43) Date of publication of application: **20.12.2023**
(21) Application number: 21929533.4
(22) Date of filing: 10.03.2021
(51) Int. Cl.: H02J 7/00

(54) **DISTRIBUTED POWER SUPPLY SYSTEM AND CONTROL METHOD**

(71) Applicant: Huawei Digital Power Technologies Co., Ltd., Shenzhen, Guangdong 518043 (CN)
(72) Inventor: ZHANG, Yezheng, Shenzhen, Guangdong 518129 (CN); LIU, Zongzhe, Shenzhen, Guangdong 518129 (CN)
(74) Representative: Epping - Hermann - Fischer
(86) International application number: PCT/CN2021/079899
(87) International publication number: WO 2022/188053

(57) **Abstract**

Embodiments of this application relate to the power supply field and provide a distributed power supply system and a control method. The system includes a battery management system and M battery units, where the battery unit includes a battery management unit and a cell. The battery management system is configured to communicate with the M battery management units to obtain M pieces of state information, and send an instruction to a target battery management unit in the M battery management units based on the M pieces of state information. The target battery management unit is configured to control, according to the instruction, voltage balancing for a battery unit in which the target battery unit is located. In embodiments of this application, each battery unit can use a battery management unit to implement voltage balancing, which facilitates the addition or reduction of battery units, and can also implement continuous power supply during the voltage balancing.

## Description

### TECHNICAL FIELD

This application relates to the field of power supply technologies, and in particular, to a distributed power supply system and a control method.

### BACKGROUND

Due to excellent features including high energy density, no memory effect, long cycle life, environmental friendliness, wide operating temperature range, low self-discharge rate, and the like, lithium-ion batteries are widely used in products including electric vehicles, energy storage base stations, or the like. A lithium-ion battery pack, as an energy carrier for an energy storage base station and an electric vehicle, is generally formed by connecting multiple battery cells in series or in parallel, where the lithium-ion battery pack may be a battery pack for short. Due to impact of the production process level and use of lithium-ion batteries, an inconsistency in the power of the battery cells may occur, which may cause a battery short board effect that reduces a capacity utilization of the battery pack. For example, the battery short board effect may be as follows: When a series battery pack formed by connecting multiple battery cells in series is discharged, a battery cell with a lowest energy level first drops to a discharge cut-off voltage, which terminates the discharge of the series battery pack. When the series battery pack is charged, a battery cell with a highest energy level first rises to a charge cut-off voltage, which terminates the charge of the series battery pack. Therefore, a balancing technology needs to be employed for energy management on a battery pack, to improve consistency between battery cells in the battery pack, reduce performance degradation of the battery pack caused by the short board effect, extend a service life of the battery pack, and improve a state of health (state of health, SoH) of the battery pack.

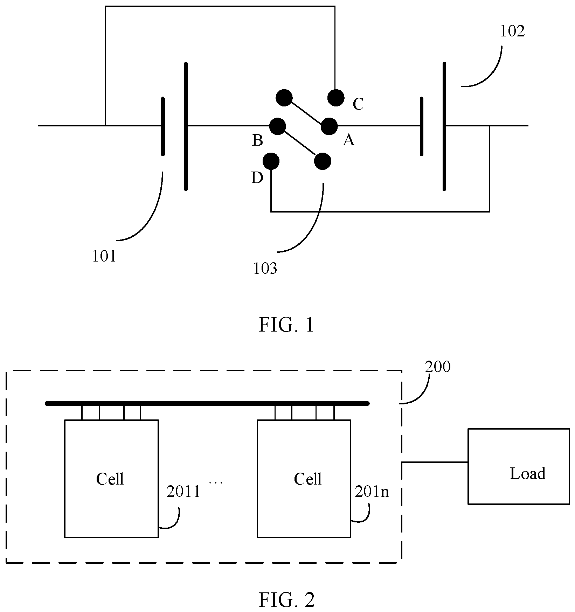

For example, FIG. 1 shows a current battery series-parallel self-balancing apparatus that employs a balancing technology for energy management on a battery pack. As shown in FIG. 1, the battery series-parallel self-balancing apparatus includes a battery module 101, a battery module 102, and a relay 103. A negative terminal of the battery module 101 is connected to a switch contact C of the relay 103, and a positive terminal of the battery module 101 is connected to a normally closed contact B of the relay 103. A positive terminal of the battery module 102 is connected to a switch contact D of the relay 103, and a negative terminal of the battery module 102 is connected to a normally closed contact A of the relay 103. When the normally closed contact A is connected to the switch contact C, and the normally closed contact B is connected to the switch contact D, the battery module 101 and the battery module 102 are connected in parallel, implementing voltage balancing between the battery module 101 and the battery module 102. When the normally closed contact A abuts against the normally closed contact B, the battery module 101 and the battery module 102 are connected in series, so that high-voltage charging and discharging can be implemented.

However, in the battery series-parallel self-balancing apparatus shown in FIG. 1, a dedicated balancing circuit needs to be provided between the batteries in the battery pack. If a quantity of battery packs changes, the balancing circuit needs to be redesigned, which is not conducive to expansion. In addition, when the battery series-parallel self-balancing apparatus shown in FIG. 1 implements a balancing function, the series circuit needs to be disconnected; consequently, the entire battery pack cannot be charged or discharged. In a charging or discharging process, the parallel circuit needs to be disconnected, and voltage balancing between the battery modules cannot be implemented. In other words, voltage balancing and charging and discharging of the battery pack cannot be started at the same time, and continuous charging and discharging and battery voltage balancing cannot be implemented, resulting in a low balancing efficiency.

### SUMMARY

Embodiments of this application provide a distributed power supply system and a control method. Each battery unit in the distributed power supply system may be provided with a battery management unit. Based on the battery management unit of each battery unit, a battery management system can implement voltage balancing for each battery unit. In this way, battery units can be conveniently added to or reduced from the distributed power supply system, and during the battery voltage balancing, the distributed power supply system can implement continuous charging and discharging, thereby improving the balancing efficiency.

According to a first aspect, an embodiment of this application provides a distributed power supply system, including a battery management system and M battery units. Each of the battery units includes a cell and a battery management unit, and the battery management system communicates with the M battery management units of the M battery units in a wired or wireless manner, where M is an integer greater than 1.

Any battery management unit is configured to obtain state information of a cell in a battery unit in which the any battery management unit is located. The battery management system is configured to: communicate with the M battery management units to obtain M pieces of state information; determine a to-be-balanced target battery unit from the M battery units based on the M pieces of state information; and send an instruction to a target battery management unit provided in the target battery unit. The target battery management unit is configured to control, according to the instruction, voltage balancing for a cell in a battery unit in which the target battery management unit is located.

In this way, in the distributed power supply system, each battery unit may use a battery management unit to implement balancing for a cell in the battery unit. Therefore, battery units can be conveniently added to or reduced from the distributed power supply system, and real-time balancing can be performed regardless of whether the battery unit is in a charging state, a discharging state, or a static state, so that the power supply continuity, safety, and reliability of the distributed power supply system can be improved, and an energy balancing capability of the battery unit can be enhanced.

In a possible implementation, the state information includes a voltage or a state of charge. The battery management system is specifically configured to determine, based on a difference between voltages or states of charge of the cells of the M battery units, a to-be-charged battery unit and/or a to-be-discharged battery unit from the M battery units, to obtain the target battery unit.

In this way, the battery management system may conveniently and quickly determine the battery unit to be charged or discharged, based on the difference between voltages or states of charge of the cells of the battery units, so as to perform voltage balancing for the battery unit to be charged or discharged.

In a possible implementation, the target battery unit includes a first battery unit and/or a second battery unit. The battery management system is specifically configured to: when a difference between voltages of the first battery unit and the second battery unit is greater than a first threshold, send a first instruction to a battery management unit of the first battery unit, and/or send a second instruction to a battery management unit of the second battery unit, where the first instruction is used to instruct to discharge the first battery unit, and the second instruction is used to instruct to charge the second battery unit. The battery management unit of the first battery unit is specifically configured to control, according to the first instruction, the first battery unit to be discharged. The battery management unit of the second battery unit is specifically configured to control, according to the second instruction, the second battery unit to be charged.

In this way, the battery management system may accurately instruct each battery management unit to implement convenient voltage balancing based on a voltage condition of a cell in the battery unit.

In a possible implementation, the battery management system is further specifically configured to continuously obtain a difference between voltages of the first battery unit and the second battery unit, and when the difference between voltages of the first battery unit and the second battery unit is less than a second threshold, send a third instruction to the battery management unit of the first battery unit and/or the battery management unit of the second battery unit, where the third instruction is used to instruct to stop voltage balancing, and the second threshold is less than the first threshold. The battery management unit of the first battery unit is further specifically configured to stop the discharging of the first battery unit according to the third instruction. The battery management unit of the second battery unit is specifically configured to stop the charging of the second battery unit according to the third instruction.

In this way, after the first battery unit and the second battery unit have implemented voltage balancing, the battery management system may instruct, in a timely manner, the first battery voltage and the second battery unit to stop voltage balancing.

In a possible implementation, the target battery unit includes a third battery unit and/or a fourth battery unit. The battery management system is specifically configured to: when a difference between charges of the third battery unit and the fourth battery unit is greater than a third threshold, send a first instruction to a battery management unit of the third battery unit, and/or send a second instruction to a battery management unit of the fourth battery unit, where the first instruction is used to instruct to discharge the third battery unit, and the second instruction is used to instruct to charge the fourth battery unit. The battery management unit of the third battery unit is specifically configured to control, according to the first instruction, the third battery unit to be discharged. The battery management unit of the fourth battery unit is specifically configured to control, according to the second instruction, the fourth battery unit to be charged.

In this way, the battery management system may accurately instruct each battery management unit to implement convenient voltage balancing based on a state-of-charge of a cell in the battery unit. In a possible implementation, the battery management system is further specifically configured to continuously obtain a difference between charges of the third battery unit and the fourth battery unit, and when the difference between charges of the third battery unit and the fourth battery unit is less than a fourth threshold, send a third instruction to the battery management unit of the third battery unit and/or the battery management unit of the fourth battery unit, where the third instruction is used to instruct to stop voltage balancing, and the fourth threshold is less than the third threshold. The battery management unit of the third battery unit is further specifically configured to stop the discharging of the third battery unit according to the third instruction. The battery management unit of the fourth battery unit is specifically configured to stop the charging of the fourth battery unit according to the third instruction. In this way, after the first battery unit and the second battery unit have implemented voltage balancing, the battery management system may instruct, in a timely manner, the first battery voltage and the second battery unit to stop voltage balancing.

In a possible implementation, any one of the battery management units includes a balancing control module, an energy dissipation resistor, and a switch. The balancing control module is configured to: obtain the state information of the cell of the battery unit in which the any battery management unit is located; send the state information of the cell of the battery unit in which the any battery management unit is located to the battery management system; receive the instruction from the battery management system; and control, according to the instruction, the switch to connect the energy dissipation resistor and the cell, so as to discharge the cell through the energy dissipation resistor, or control, according to the instruction, the switch to connect a replenishment power source and the cell, so as to charge the cell through the replenishment power source. The replenishment power source is connected to the cell in a wireless or wired manner.

In this way, the battery management unit may discharge the cell based on the energy dissipation resistor, and charge the cell based on the replenishment power source. It should be noted that, in this implementation, because the replenishment power source can wirelessly charge the cell, the battery management unit may not include the replenishment power source. When the battery management unit does not include the replenishment power source, the structure of the battery management unit is relatively simple and easy to implement.

In a possible implementation, the distributed power supply system further includes a heat dissipation device. The M battery management units are disposed in a heat dissipation path of the heat dissipation device. The heat dissipation device is configured to dissipate heat from the M battery management units. In this way, heat dissipation may be implemented for the battery management unit, so that a fast current or the like can be run on the battery management unit, thereby reducing the damage of the battery management unit due to overheating.

In a possible implementation, the distributed power supply system further includes a liquid cooling pipe. The M battery management units are closely fitted to the liquid cooling pipe. The liquid cooling pipe is configured to dissipate heat from the M battery management units. In this way, heat dissipation may be implemented for the battery management unit, so that a fast current or the like can be run on the battery management unit, thereby reducing the damage of the battery management unit due to overheating.

According to a second aspect, an embodiment of this application provides a control method, applied to a distributed power supply system including a battery management system and M battery units. Each of the battery units includes a cell and a battery management unit, and the battery management system communicates with the M battery management units of the M battery units in a wired or wireless manner, where M is an integer greater than 1. The method includes:
obtaining, based on the M battery management units, state information of cells in respective battery units in which the M battery management units are located; obtaining M pieces of state information based on communication between the battery management system and the M battery management units; determining a to-be-balanced target battery unit from the M battery units based on the M pieces of state information; sending an instruction to a target battery management unit provided in the target battery unit; and controlling, according to the instruction, voltage balancing for a cell in the battery unit in which the target battery management unit is located.

In a possible implementation, the state information includes a voltage or a state of charge. The determining a to-be-balanced target battery unit from the M battery units based on the M pieces of state information includes: determining, based on a difference between voltages or states of charge of the cells of the M battery units, a to-be-charged battery unit and/or a to-be-discharged battery unit from the M battery units, to obtain the target battery unit.

In a possible implementation, the target battery unit includes a first battery unit and/or a second battery unit. The sending an instruction to a target battery management unit provided in the target battery unit includes: when a difference between voltages of the first battery unit and the second battery unit is greater than a first threshold, sending a first instruction to a battery management unit of the first battery unit, and/or sending a second instruction to a battery management unit of the second battery unit, where the first instruction is used to instruct to discharge the first battery unit, and the second instruction is used to instruct to charge the second battery unit. The controlling, according to the instruction, voltage balancing for a cell in the battery unit in which the target battery management unit is located includes: controlling, according to the first instruction, the first battery unit to be discharged; and controlling, according to the second instruction, the second battery unit to be charged.

In a possible implementation, the controlling, according to the instruction, voltage balancing for a cell in the battery unit in which the target battery management unit is located further includes: continuously obtaining a difference between voltages of the first battery unit and the second battery unit, and when the difference between voltages of the first battery unit and the second battery unit is less than a second threshold, sending a third instruction to the battery management unit of the first battery unit and/or the battery management unit of the second battery unit, where the third instruction is used to instruct to stop voltage balancing, and the second threshold is less than the first threshold; stopping the discharging of the first battery unit according to the third instruction; and stopping the charging of the second battery unit according to the third instruction.

In a possible implementation, the target battery unit includes a third battery unit and/or a fourth battery unit. The sending an instruction to a target battery management unit provided in the target battery unit includes: when a difference between charges of the third battery unit and the fourth battery unit is greater than a third threshold, sending a first instruction to a battery management unit of the third battery unit, and/or sending a second instruction to a battery management unit of the fourth battery unit, where the first instruction is used to instruct to discharge the third battery unit, and the second instruction is used to instruct to charge the fourth battery unit. The controlling, according to the instruction, voltage balancing for a cell in the battery unit in which the target battery management unit is located includes: controlling, according to the first instruction, the third battery unit to be discharged; and
controlling, according to the second instruction, the fourth battery unit to be charged.

In a possible implementation, the controlling, according to the instruction, voltage balancing for a cell in the battery unit in which the target battery management unit is located further includes: continuously obtaining a difference between charges of the third battery unit and the fourth battery unit, and when the difference between charges of the third battery unit and the fourth battery unit is less than a fourth threshold, sending a third instruction to the battery management unit of the third battery unit and/or the battery management unit of the fourth battery unit, where the third instruction is used to instruct to stop voltage balancing, and the fourth threshold is less than the third threshold; stopping the discharging of the third battery unit according to the third instruction; and stopping the charging of the fourth battery unit according to the third instruction.

In a possible implementation, any one of the battery management units includes a balancing control module, an energy dissipation resistor, and a switch. The obtaining, based on the M battery management units, state information of cells in respective battery units in which the M battery management units are located includes: obtaining state information of a cell in a battery unit in which the any battery management unit is located; sending, to the battery management system, state information of a cell in a battery unit in which the any battery management unit is located; receiving the instruction from the battery management system; and controlling, according to the instruction, the switch to connect the energy dissipation resistor and the cell, so as to discharge the cell through the energy dissipation resistor, or controlling, according to the instruction, the switch to connect a replenishment power source and the cell, so as to charge the cell through the replenishment power source. The replenishment power source is connected to the cell in a wireless or wired manner.

According to a third aspect, an embodiment of this application provides a battery unit, including a battery management unit and a cell. The battery management unit is configured to: obtain state information of a cell in the battery unit; send the state information to a battery management system; receive an instruction from the battery management system; and control voltage balancing for the battery unit according to the instruction.

In a possible implementation, the battery management unit includes a balancing control module, an energy dissipation resistor, and a switch. The balancing control module is configured to: obtain the state information of the cell; send the state information of the cell to the battery management system; receive the instruction from the battery management system; and control, according to the instruction, the switch to connect the energy dissipation resistor and the cell, so as to discharge the cell through the energy dissipation resistor; or control, according to the instruction, the switch to connect a replenishment power source and the cell, so as to charge the cell through the replenishment power source. The replenishment power source is connected to the cell in a wireless or wired manner.

In a possible implementation, the state information includes a voltage or a state of charge.

According to a fourth aspect, an embodiment of this application provides a battery management system. The battery management system is configured to: communicate with battery management units of M battery units to obtain M pieces of state information; determine a to-be-balanced target battery unit from the M battery units based on the M pieces of state information; and send an instruction to a target battery management unit provided in the target battery unit, where the instruction is used to instruct the target battery management unit to perform voltage balancing.

In a possible implementation, the state information includes a voltage or a state of charge. The battery management system is specifically configured to determine, based on a difference between voltages or states of charge of the M battery units, a to-be-charged battery unit and/or a to-be-discharged battery unit from the M battery units, to obtain the target battery unit.

In a possible implementation, the target battery unit includes a first battery unit and/or a second battery unit. The battery management system is specifically configured to: when a difference between voltages of the first battery unit and the second battery unit is greater than a first threshold, send a first instruction to a battery management unit of the first battery unit, and/or send a second instruction to a battery management unit of the second battery unit, where the first instruction is used to instruct to discharge the first battery unit, and the second instruction is used to instruct to charge the second battery unit.

In a possible implementation, the battery management system is further specifically configured to continuously obtain a difference between voltages of the first battery unit and the second battery unit, and when the difference between voltages of the first battery unit and the second battery unit is less than a second threshold, send a third instruction to the battery management unit of the first battery unit and/or the battery management unit of the second battery unit, where the third instruction is used to instruct to stop voltage balancing, and the second threshold is less than the first threshold.

In a possible implementation, the target battery unit includes a third battery unit and/or a fourth battery unit. The battery management system is specifically configured to: when a difference between charges of the third battery unit and the fourth battery unit is greater than a third threshold, send a first instruction to a battery management unit of the third battery unit, and/or send a second instruction to a battery management unit of the fourth battery unit, where the first instruction is used to instruct to discharge the third battery unit, and the second instruction is used to instruct to charge the fourth battery unit.

In a possible implementation, the battery management system is further specifically configured to continuously obtain a difference between charges of the third battery unit and the fourth battery unit, and when the difference between charges of the third battery unit and the fourth battery unit is less than a fourth threshold, send a third instruction to the battery management unit of the third battery unit and/or the battery management unit of the fourth battery unit, where the third instruction is used to instruct to stop voltage balancing, and the fourth threshold is less than the third threshold.

According to a fifth aspect, an embodiment of this application provides a control method, including: obtaining state information of a cell in a battery unit; sending the state information to a battery management system; receiving an instruction from the battery management system; and controlling voltage balancing for the battery unit according to the instruction.

In a possible implementation, the controlling voltage balancing for the battery unit according to the instruction includes: controlling, according to a first instruction, the battery unit to be discharged; or controlling, according to a second instruction, the battery unit to be charged; or stopping the discharging or charging of the battery unit according to a third instruction, where the first instruction is used to instruct to discharge the battery unit, the second instruction is used to instruct to charge the battery unit, and the third instruction is used to instruct to stop voltage balancing.

In a possible implementation, the state information includes a voltage or a state of charge.

According to a sixth aspect, an embodiment of this application provides a control method, including: communicating with battery management units of M battery units to obtain M pieces of state information; determining a to-be-balanced target battery unit from the M battery units based on the M pieces of state information; and sending an instruction to a target battery management unit provided in the target battery unit, where the instruction is used to instruct the target battery management unit to perform voltage balancing.

In a possible implementation, the state information includes a voltage or a state of charge. The determining a to-be-balanced target battery unit from the M battery units based on the M pieces of state information includes: determining, based on a difference between voltages or states of charge of the M battery units, a to-be-charged battery unit and/or a to-be-discharged battery unit from the M battery units, to obtain the target battery unit.

In a possible implementation, the target battery unit includes a first battery unit and/or a second battery unit. The sending an instruction to a target battery management unit provided in the target battery unit includes:
when a difference between voltages of the first battery unit and the second battery unit is greater than a first threshold, sending a first instruction to the battery management unit of the first battery unit, and/or sending a second instruction to the battery management unit of the second battery unit, where the first instruction is used to instruct to discharge the first battery unit, and the second instruction is used to instruct to charge the second battery unit.

In a possible implementation, the sending an instruction to a target battery management unit provided in the target battery unit further includes: continuously obtaining a difference between voltages of the first battery unit and the second battery unit, and when the difference between voltages of the first battery unit and the second battery unit is less than a second threshold, sending a third instruction to the battery management unit of the first battery unit and the battery management unit of the second battery unit, where the third instruction is used to instruct to stop voltage balancing, and the second threshold is less than the first threshold.

In a possible implementation, the target battery unit includes a third battery unit and/or a fourth battery unit. The sending an instruction to a target battery management unit provided in the target battery unit includes: when a difference between charges of the third battery unit and the fourth battery unit is greater than a third threshold, sending a first instruction to a battery management unit of the third battery unit, and/or sending a second instruction to a battery management unit of the fourth battery unit, where the first instruction is used to instruct to discharge the third battery unit, and the second instruction is used to instruct to charge the fourth battery unit.

In a possible implementation, the sending an instruction to a target battery management unit provided in the target battery unit further includes: continuously obtaining a difference between charges of the third battery unit and the fourth battery unit, and when the difference between charges of the third battery unit and the fourth battery unit is less than a fourth threshold, sending a third instruction to the battery management unit of the third battery unit and the battery management unit of the fourth battery unit, where the third instruction is used to instruct to stop voltage balancing, and the fourth threshold is less than the third threshold.

According to a seventh aspect, this application provides a chip or a chip system. The chip or the chip system includes at least one processor and a communication interface. The communication interface and the at least one processor are interconnected through a line. The at least one processor is configured to execute a computer program or instructions, to perform the control method described in any one of the implementations of the fourth aspect or the fifth aspect.

The communication interface in the chip may be an input/output interface, a pin, a circuit, or the like.

In a possible implementation, the chip or the chip system described above in this application further includes at least one memory, and the at least one memory stores instructions. The memory may be a storage unit inside the chip, for example, a register or a cache, or may be a storage unit (for example, a read-only memory or a random access memory) of the chip.

According to an eighth aspect, an embodiment of this application provides a computer-readable storage medium. The computer-readable storage medium stores a computer program or instructions. When the computer program or instructions are executed on a computer, the computer is caused to perform the control method described in any one of the implementations of the fifth aspect or the sixth aspect.

According to a ninth aspect, an embodiment of this application provides a computer program product, including a computer program. When the computer program is executed by a processor, the control method according to any one of the fifth aspect or the sixth aspect is implemented.

It should be understood that the technical solutions in the second aspect to the ninth aspect of embodiments of this application correspond to the technical solution in the first aspect of embodiments of this application, and the beneficial effects achieved by the aspects and the corresponding feasible implementations are similar and not to be repeated.

### BRIEF DESCRIPTION OF DRAWINGS

FIG. 1 is a schematic diagram of an existing voltage balancing structure;
FIG. 2 is a schematic diagram of an architecture of a power supply system;
FIG. 3 is a schematic diagram of an architecture of a distributed power supply system according to an embodiment of this application;
FIG. 4 is a schematic diagram of an architecture of another distributed power supply system according to an embodiment of this application;
FIG. 5 is a schematic diagram of an architecture of a battery management unit according to an embodiment of this application;
FIG. 6 is a schematic flowchart of a control method according to an embodiment of this application; and
FIG. 7 is a schematic diagram of a structure of a chip according to an embodiment of this application.

### DESCRIPTION OF EMBODIMENTS

In order to clearly describe technical solutions in embodiments of this application, the terms such as "first" and "second" are used in embodiments of this application to distinguish the same or similar items having basically the same function and effect. For example, a first battery unit and a second battery unit are merely used to distinguish battery units used in different scenarios, without limiting the order thereof. A person skilled in the art may understand that the terms such as "first" and "second" do not limit a quantity, and the terms such as "first" and "second" do not necessarily limit a difference.

It should be noted that in this application, the term such as "example" or "for example" is used to represent giving an example, an illustration, or a description. Any embodiment or design described by "example" or "for example" in this application should not be construed as being preferred or more advantageous over other embodiments or designs. To be precise, the use of the term such as "example" or "for example" is intended to present a related concept in a specific manner.

In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural.

Embodiments of this application may be applied to various power supply systems, for example, a power supply system in a base station, a power supply system in an electric vehicle, a power supply system for a data center, a power supply system for an uninterruptible power supply (uninterruptible power supply, UPS), a power supply system in a power grid, or another power supply system.

A power supply system usually includes a plurality of cells that are connected in series or in parallel or in other manners for power supply. The plurality of cells may be disposed in different spaces in a distributed manner, or may be assembled together, which is not specifically limited in embodiments of this application. A cell may also be referred to as an electrochemical cell, a battery, a lithium battery cell, a battery cell, an electrical cell, or the like. The cell may be a lithium-ion cell, or a cell of another type. For example, the cell may be a pouch, cylindrical, prismatic, or special-shaped lithium battery.

The base station may be an evolved NodeB (evolved NodeB, eNB, or eNodeB) in a long term evolution (long term evolution, LTE) system, or may be a home NodeB (for example, a home evolved NodeB, or a home NodeB, HNB) or a baseband unit (base band unit, BBU), or may be a radio controller in a cloud radio access network (cloud radio access network, CRAN) scenario. Alternatively, the energy storage base station may be a relay station, an access point, an access network device in a 5G network, an access network device in a future evolved public land mobile communications network (public land mobile network, PLMN), or the like, or may be an access point (access point, AP) in a WLAN, or may be a gNB in a new radio (new radio, NR) system. This is not limited in embodiments of this application.

The electric vehicle may be a car, a truck, a motorcycle, a bus, a ship, an airplane, a helicopter, a lawn mower, a recreational vehicle, a playground vehicle, a construction device, a trolley, a golf cart, a train, a handcart, or the like. This is not specifically limited in embodiments of this application.

For example, FIG. 2 is a schematic diagram of an architecture of a power supply system 200. As shown in FIG. 2, the power supply system 200 may include a cell 2011 to a cell 201n, where a value of n may be determined according to an actual application scenario. The cell 2011 to the cell 201n may supply power to a load in a series or parallel manner.

Due to a short board effect of the battery, a capacity utilization is relatively low when the power supply system 200 supplies power to the load. Even if the battery series-parallel self-balancing apparatus is provided in the power supply system 200 as shown in FIG. 1, because the series circuit needs to be disconnected when the battery series-parallel self-balancing apparatus implements a balancing function, the distributed power supply system 200 performs charging and discharging. In a charging and discharging process, the parallel circuit needs to be disconnected, voltage balancing between the cells of the distributed power supply system 200 cannot be implemented. Therefore, continuous charging and discharging and battery voltage balancing cannot be implemented, resulting in a low balancing efficiency. In addition, if a quantity of cells in the power supply system 200 changes, for example, by adding or reducing cells, the balancing circuit needs to be redesigned based on a connection relationship between the cells, which is not conducive to expansion of the power supply system 200.

In view of this, an embodiment of this application provides a distributed power supply system. The distributed power supply system includes a battery management system (battery management system, BMS) and M battery units.

Each battery unit includes a cell and a battery management unit (battery management unit, BMU). The battery management unit may monitor state information of the cell in the battery unit and control charging and discharging of the battery unit. The state information of the battery unit may include a voltage, a state of charge (state of charge, SoC), or the like.

The battery management units of the battery units may all communicate with the battery management system, so that the battery management system may obtain state information of the battery units, and control, based on the state information of the battery units, the battery management units of the battery units to charge a low-voltage battery unit and/or discharge a high-voltage battery unit, thereby implementing voltage balancing between the battery units. In this way, the battery management system can implement battery voltage balancing while implementing continuous charging and discharging, thereby improving the balancing efficiency. In addition, each battery unit may implement voltage balancing based on the control of the battery management unit, or in other words, each battery unit may separately perform voltage balancing based on their structure. Therefore, adding or reducing battery units to or from the distributed power supply system does not affect the original battery units, and the voltage balancing circuit does not need to be redesigned. In this way, the distributed power supply system can be conveniently expanded.

As an example rather than a limitation, when the BMS and the BMU are based on wireless communication, 3G cellular communications, for example, code division multiple access (code division multiple access, CDMA), EVD0, or global system for mobile communications (global system for mobile communications, GSM)/general packet radio service (general packet radio service, GPRS), or 4G cellular communications, for example, LTE, or 5G cellular communications may be used. Alternatively, wireless fidelity (wireless-fidelity, WiFi) and wireless local area network (wireless local area network, WLAN) may be used for communication. Alternatively, infrared link, Bluetooth, or ZigBee protocol may be used for communication.

It may be understood that, when the battery management unit and the battery management system of the battery unit are based on wireless communication, the battery management unit and the battery management system may be disposed in a distributed manner in space, without being limited by line connection. In addition, when a battery unit is swapped or a new battery unit is connected to the distributed power supply system, the swapped battery unit or the new battery unit may conveniently establish communication with the battery management system, which facilitates expansion or component swapping of the distributed power supply system.

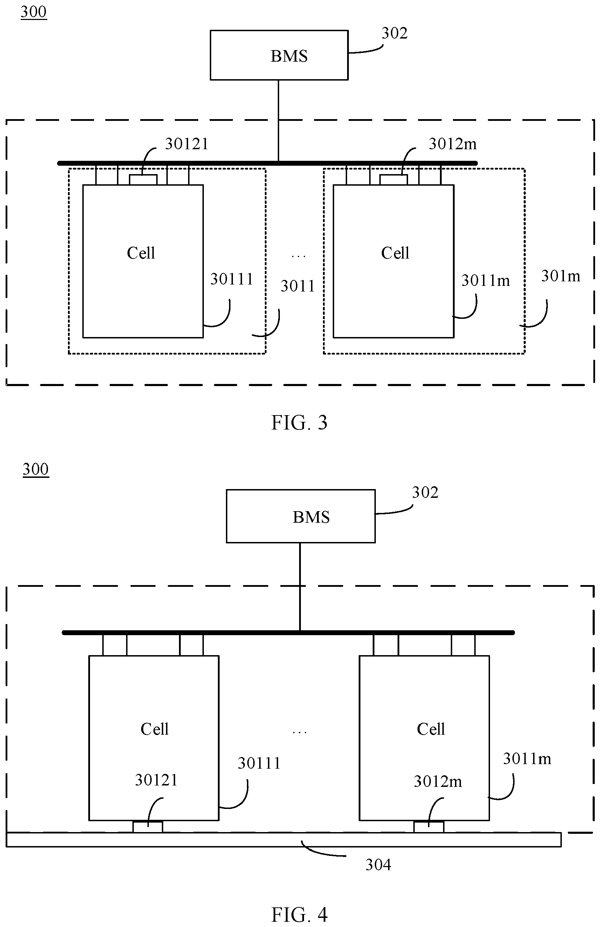

For example, FIG. 3 is a schematic diagram of an architecture of a distributed power supply system 300 according to an embodiment of this application.

As shown in FIG. 3, the distributed power supply system 300 includes a battery management system 302 and M battery units, for example, a battery unit 3011 to a battery unit 301m. The battery management system 302 communicates with the M battery units in a wired or wireless manner. Specifically, the battery unit includes a cell and a battery management unit. For example, as shown in FIG. 3, a cell 30111 to a cell 3011m, and a battery management unit 30121 to a battery management unit 3012m are included. A value of M may be determined according to actual application scenarios. The M battery units may also be referred to as a battery pack.

The battery unit 3011 is used as an example for description. The battery unit 3011 is provided with the battery management unit 30121 and the cell 30111. The battery management unit 30121 may be a chip, or a processor running a computer program, or a module configured to implement a battery management function, or the like. The battery management unit 30121 may be integrated into the cell 30111, or may be used as an external device of the cell 30111. This is not specifically limited in embodiments of this application.

For example, in a specific implementation, as shown in FIG. 3, the battery management unit 30121 may be disposed at a position between positive and negative terminals of the cell 30111.

In another specific implementation, as shown in FIG. 4, the battery management unit 30121 may be disposed at a position at the bottom (a side away from the positive and negative terminals) of the cell 30111.

In other implementations, the battery management unit 30121 may be disposed at any position such as a side of the cell 30111. A specific position of the battery management unit 30121 disposed on the cell 30111 is not limited in embodiments of this application.

Optionally, to ensure that the battery management unit 30121 has good heat dissipation, a heat dissipation device may be provided for the battery management unit 30121, so that a fast current or the like can be run on the battery management unit 30121, thereby reducing the damage of the battery management unit 30121 due to overheating.

For example, the battery management unit 30121 may be disposed in a heat dissipation path of the heat dissipation device, to dissipate heat from the battery management unit 30121. Alternatively, the scattering device may be closely fitted to the battery management unit 30121. For example, as shown in FIG. 4, the heat dissipation apparatus may be a liquid cooling pipe 304. The battery management unit 30121 is closely fitted to the liquid cooling pipe 304, and the liquid cooling pipe 304 may dissipate heat from the battery management unit 3031.

It should be noted that the M battery units may be some battery units of the distributed power supply system 300. Alternatively, it is understood that, in addition to the M battery units provided with battery management units, the distributed power supply system 300 may further include battery units in other forms. The battery units in other forms may include, for example, a cell that is not provided with a battery management unit. In other words, the distributed power supply system 300 may be a comprehensive power supply system. Alternatively, the M battery units may be all battery units of the distributed power supply system 300. This is not specifically limited in embodiments of this application.

It may be understood that the M battery units may be combined together in space, or may be distributed at different positions. Correspondingly, the heat dissipation device is also adaptively disposed according to different positions of the battery units.

The working principle of the distributed power supply system shown in FIG. 3 or FIG. 4 is described below.

The distributed power supply system in FIG. 3 is used as an example. When the distributed power supply system works, the M battery units may be connected in series to form a battery pack, to supply power to a load.

In a power supply process, a battery management unit of any battery unit may monitor a state of a cell in the battery unit in real time, to obtain state information of the battery unit. The state information of the battery unit may include one or more of a voltage, a state of charge, a state of health, a current, a temperature, or the like.

The battery management system may communicate with the M battery management units, to obtain state information of the M battery units. Further, the battery management system sends an instruction to a target battery management unit in the M battery management units based on M pieces of state information, where the instruction is used for voltage balancing for the target battery management unit. The target battery management unit may be a battery management unit of a battery unit requiring voltage balancing in the M battery units. Specifically, the battery unit requiring voltage balancing may be a battery unit with a relatively high voltage or a relatively low voltage.

After receiving the instruction, the target battery management unit may control, according to the instruction, voltage balancing for the battery unit in which the target battery unit is located, for example, by discharging a battery unit with a relatively high voltage, and/or charging a battery unit with a relatively low voltage.

In this way, in the distributed power supply system in this embodiment of this application, voltage balancing can be implemented together with continuous power supply, the balancing efficiency is high, and the structure is simple.

For example, the battery management system controlling the target battery management unit to implement voltage balance for the battery unit may include the following implementations. Manner 1: The battery management system performs voltage balancing for the battery units based on voltages of the battery units.

It may be understood that a voltage of a cell in a battery unit is an easily obtained parameter. Therefore, the battery management system conveniently performs voltage balancing for the battery units based on the voltages of the battery units.

Specifically, the state information of the battery unit includes a voltage of a cell in the battery unit, and the target battery management unit includes a battery management unit of a first battery unit in the M battery units and a battery management unit of a second battery unit in the M battery units. It may be understood that the first battery unit and the second battery unit are defined for ease of description, and do not impose a particular limitation on a battery unit corresponding to the target battery management unit.

When a difference between voltages of the first battery unit and the second battery unit is greater than a first threshold, the battery management system sends a first instruction to the battery management unit of the first battery unit; or the battery management system sends a second instruction to the battery management unit of the second battery unit; or the battery management system sends the first instruction to the battery management unit of the first battery unit, and sends the second instruction to the battery management unit of the second battery unit, where the first instruction is used to instruct to discharge the first battery unit, and the second instruction is used to charge the second battery unit.

Specifically, after obtaining voltages of the cells in the M battery units, the battery management system may separately calculate a voltage difference between voltages of two battery units. If a difference between voltages of any two battery units is greater than the first threshold, voltage balancing for the two battery units is started. It may be understood that the first threshold may be set, for example, to about 30 mv, according to actual applications. The first threshold is not specifically limited in embodiments of this application.

For example, the difference between voltages of the first battery unit and the second battery unit is greater than the first threshold, and the voltage of the first battery unit is greater than that of the second battery unit.

In a first implementation, the battery management system sends the first instruction to the battery management unit of the first battery unit, where the first instruction is used to instruct to discharge the first battery unit. In this case, the battery management unit of the first battery unit may control, according to the first instruction, the first battery unit to be discharged. The discharging of the first battery unit can reduce the difference between voltages of the first battery unit and the second battery unit, thereby implementing voltage balancing between the first battery unit and the second battery unit. It may be understood that, in this manner, a voltage balancing step may not be performed for the second battery unit, or in other words, the second battery unit may not be aware of the voltage balancing.

In a second implementation, the battery management system sends the second instruction to the battery management unit of the second battery unit, where the second instruction is used to instruct to charge the second battery unit. In this case, the battery management unit of the second battery unit may control, according to the second instruction, the second battery unit to be charged. The charging of the second battery unit can reduce the difference between voltages of the first battery unit and the second battery unit, thereby implementing voltage balancing between the first battery unit and the second battery unit. It may be understood that, in this manner, a voltage balancing step may not be performed for the first battery unit, or in other words, the first battery unit may not be aware of the voltage balancing.

In a third implementation, the battery management system sends the first instruction to the battery management unit of the first battery unit, and sends the second instruction to the battery management unit of the second battery unit. In this case, the battery management unit of the first battery unit may control, according to the first instruction, the first battery unit to be discharged, and the battery management unit of the second battery unit may control, according to the second instruction, the second battery unit to be charged. The discharging of the first battery unit and the charging of the second battery unit can rapidly reduce the difference between voltages of the first battery unit and the second battery unit, thereby implementing fast voltage balancing between the first battery unit and the second battery unit.

In the process of discharging the first battery unit and/or charging the second battery unit, the battery management system may continuously obtain a difference between voltages of the first battery unit and the second battery unit, and when the difference between voltages of the first battery unit and the second battery unit is less than a second threshold, send a third instruction to the battery management unit of the first battery unit and/or the battery management unit of the second battery unit, where the third instruction is used to instruct to stop voltage balancing, and the second threshold is less than the first threshold.

Specifically, when determining that the difference between voltages of the first battery unit and the second battery unit is less than the second threshold, the battery management system may stop voltage balancing between the first battery unit and the second battery unit. It may be understood that the second threshold may be set, for example, to about 10 mv, according to actual applications.

The second threshold is not specifically limited in embodiments of this application.

Corresponding to the foregoing first implementation, the battery management unit of the first battery unit stops the discharging of the first battery unit according to the third instruction. Corresponding to the foregoing second implementation, the battery management unit of the second battery unit stops the charging of the second battery unit according to the third instruction. Corresponding to the foregoing third implementation, the battery management unit of the first battery unit stops the discharging of the first battery unit according to the third instruction, and the battery management unit of the second battery unit stops the charging of the second battery unit according to the third instruction.

It may be understood that specific forms of the first instruction, the second instruction, and the third instruction may be set according to actual application scenarios. This is not specifically limited in embodiments of this application.

Manner 2: The battery management system performs voltage balancing for the battery units based on states of charge of the battery units.

It may be understood that a state of charge of a cell in a battery unit is an easily obtained parameter. Therefore, the battery management system conveniently performs voltage balancing for the battery units based on the states of charge of the battery units. Specifically, the state information of the battery unit includes a state of charge of the battery unit, and the target battery management unit includes a battery management unit of a third battery unit in the M battery units and a battery management unit of a fourth battery unit in the M battery units. It may be understood that the third battery unit and the fourth battery unit are defined for ease of description, and do not impose a particular limitation on a battery unit corresponding to the target battery management unit. The third battery unit and the fourth battery unit may be the same as or different from the first battery unit and the second battery unit described above.

When a difference between charges of the third battery unit and the fourth battery unit is greater than a third threshold, the battery management system sends a first instruction to the battery management unit of the third battery unit; or the battery management system sends a second instruction to the battery management unit of the fourth battery unit; or the battery management system sends the first instruction to the battery management unit of the third battery unit, and sends the second instruction to the battery management unit of the fourth battery unit, where the first instruction is used to instruct to discharge the third battery unit, and the second instruction is used to charge the fourth battery unit.

Specifically, after obtaining voltages of the M battery units, the battery management system may separately calculate a voltage difference between voltages of two battery units. If a difference between voltages of any two battery units is greater than the third threshold, voltage balancing for the two battery units is started. It may be understood that the third threshold may be set according to actual applications, and the third threshold is not specifically limited in embodiments of this application.

For example, the difference between voltages of the third battery unit and the fourth battery unit is greater than the third threshold, and the voltage of the third battery unit is greater than that of the fourth battery unit.

In an implementation A, the battery management system sends the first instruction to the battery management unit of the third battery unit, where the first instruction is used to instruct to discharge the third battery unit. In this case, the battery management unit of the third battery unit may control, according to the first instruction, the third battery unit to be discharged. The discharging of the third battery unit can reduce the difference between voltages of the third battery unit and the fourth battery unit, thereby implementing voltage balancing between the third battery unit and the fourth battery unit. It may be understood that, in this manner, a voltage balancing step may not be performed for the fourth battery unit, or in other words, the fourth battery unit may not be aware of the voltage balancing.

In an implementation B, the battery management system sends the second instruction to the battery management unit of the fourth battery unit, where the second instruction is used to instruct to charge the fourth battery unit. In this case, the battery management unit of the fourth battery unit may control, according to the second instruction, the fourth battery unit to be charged. The charging of the fourth battery unit can reduce the difference between voltages of the third battery unit and the fourth battery unit, thereby implementing voltage balancing between the third battery unit and the fourth battery unit. It may be understood that, in this manner, a voltage balancing step may not be performed for the third battery unit, or in other words, the third battery unit may not be aware of the voltage balancing.

In an implementation C, the battery management system sends the first instruction to the battery management unit of the third battery unit, and sends the second instruction to the battery management unit of the fourth battery unit. In this case, the battery management unit of the third battery unit may control, according to the first instruction, the third battery unit to be discharged, and the battery management unit of the fourth battery unit may control, according to the second instruction, the fourth battery unit to be charged. The discharging of the third battery unit and the charging of the fourth battery unit can rapidly reduce the difference between voltages of the third battery unit and the fourth battery unit, thereby implementing fast voltage balancing between the third battery unit and the fourth battery unit.

In the process of discharging the third battery unit and/or charging the fourth battery unit, the battery management system may continuously obtain a difference between voltages of the third battery unit and the fourth battery unit, and when the difference between voltages of the third battery unit and the fourth battery unit is less than a fourth threshold, send a third instruction to the battery management unit of the third battery unit and/or the battery management unit of the fourth battery unit, where the third instruction is used to instruct to stop voltage balancing, and the fourth threshold is less than the third threshold.

Specifically, when determining that the difference between voltages of the third battery unit and the fourth battery unit is less than the fourth threshold, the battery management system may stop voltage balancing between the third battery unit and the fourth battery unit. It may be understood that the fourth threshold may be set according to actual applications, and the fourth threshold is not specifically limited in embodiments of this application.

Corresponding to the foregoing implementation A, the battery management unit of the third battery unit stops the discharging of the third battery unit according to the third instruction. Corresponding to the foregoing implementation B, the battery management unit of the fourth battery unit stops the charging of the fourth battery unit according to the third instruction. Corresponding to the foregoing implementation C, the battery management unit of the third battery unit stops the discharging of the third battery unit according to the third instruction, and the battery management unit of the fourth battery unit stops the charging of the fourth battery unit according to the third instruction.

In a possible implementation, when the state information of the battery unit includes a state of health of the battery unit, a current of the battery unit, or a temperature of the battery unit, the battery management unit may further adjust an operating duration of the battery unit based on the state of health of the battery unit. For example, when the state of health of the battery unit is lower than a state-of-health threshold, the battery management unit controls the operating duration of the battery unit to not exceed a specific value. Alternatively, the battery management unit may further control an output power of the battery unit based on the current of the battery unit. For example, when the current of the battery unit is greater than a current threshold, the battery management unit controls the output power of the battery unit to decrease. Alternatively, the battery management system may control a power of the heat dissipation device based on the temperature of the battery unit. For example, when the temperature of the battery unit is higher than a temperature threshold, the battery management system may increase the power of the heat dissipation device to increase heat dissipation. This is not specifically limited in embodiments of this application.

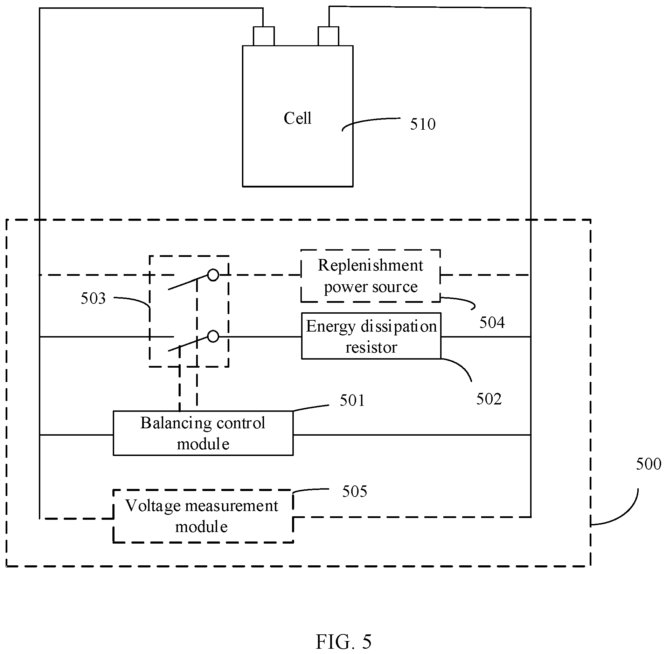

Optionally, an embodiment of this application provides a specific battery management unit. It may be understood that the battery management unit may be applied to any one of the foregoing battery units. As shown in FIG. 5, the battery management unit 500 includes a balancing control module 501, an energy dissipation resistor 502, and a switch 503. The energy dissipation resistor 502 and the switch 503 may form a series circuit to be connected to positive and negative electrodes of a cell 510, to discharge the cell 510. The balancing control module 501 may control opening and closing of the switch 503. The switch 503 may be a switch array, or may be an independent switch. When operating, the balancing control module 501 may obtain state information of the cell 510, send the state information of the cell 510 to a battery management system, receive a first instruction from the battery management system, and control the switch 503 to connect the energy dissipation resistor 502 and the cell 510 according to the first instruction, so as to discharge the cell 510 through the energy dissipation resistor 502.

For example, the balancing control module 501 may be provided with a submodule having a voltage measurement capability, and a voltage of the cell 510 is measured by using the submodule having the voltage measurement capability, where the voltage is used as the state information of the cell 510. Alternatively, the balancing control module 501 may read a state of charge of the cell 510, where the charge is used as the state information of the cell 510.

Optionally, the battery management unit 500 may further include an independent voltage measurement module 505, and the voltage of the cell 510 may be measured by using the voltage measurement module 505, where the voltage is used as the state information of the cell 510.

Optionally, the battery management unit 500 may further include a replenishment power source 504. The replenishment power source 504 and the switch 503 may form a series circuit to be connected to the positive and negative electrodes of the cell 510, to charge the cell 510. When receiving a second instruction from the battery management system, the balancing control module 501 may control the switch 503 to connect the replenishment power source 504 and the cell 510, so as to charge the cell 510 through the replenishment power source 504.

It may be understood that the replenishment power source may not be included in the battery management unit 500, but is used as an external device. When receiving the second instruction from the battery management system, the balancing control module 501 may control the replenishment power source to charge the cell 510 in a wireless charging manner. In this implementation, because the battery management unit 500 may not include the replenishment power source, the structure of the battery management unit 500 is relatively simple and easy to implement.

Specifically, for a scenario in which the battery management unit 500 receives the first instruction or the second instruction, refer to the description of the foregoing distributed power supply system, and details are not described herein again.

In conclusion, in the distributed power supply system in this embodiment of this application, because each battery unit can use a battery management unit to implement voltage balancing, without an additional balancing apparatus, the complexity of a balancing circuit is reduced. In addition, during balancing for the battery units, the circuit does not need to be frequently switched. As long as the battery unit meets a balancing condition, real-time balancing can be performed regardless of whether the battery unit is in a charging state, a discharging state, or a static state. Therefore, the safety and reliability of the distributed power supply system can be improved, an energy balancing capability of the battery unit can be enhanced, and the short board effect of the series battery pack can be effectively addressed.

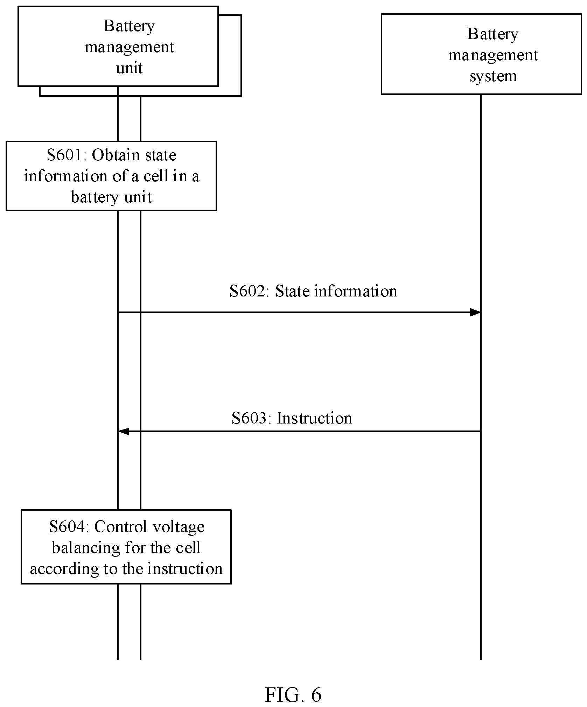

With reference to embodiments corresponding to FIG. 3 to FIG. 5, an embodiment of this application further provides a control method. For example, FIG. 6 is a schematic flowchart of a control method according to an embodiment of this application. The control method of this embodiment of this application may include the following steps.

S601: M battery management units obtain state information of cells in M battery units.

S602: The M battery management units send M pieces of state information to a battery management system.

Correspondingly, the battery management system receives the state information of the M battery units from the M battery management units.

S603: The battery management system sends an instruction to a target battery management unit in the M battery management units based on the state information of the M battery units. Correspondingly, the battery management unit receives the instruction from the battery management system.

The instruction is used to instruct the target battery management unit to perform voltage balancing. In a possible implementation, the state information includes a voltage, and the target battery management unit includes a battery management unit of a first battery unit and a battery management unit of a second battery unit; and S603 includes:
when a difference between voltages of the first battery unit and the second battery unit is greater than a first threshold, sending a first instruction to the battery management unit of the first battery unit, and/or sending a second instruction to the battery management unit of the second battery unit, where the first instruction is used to instruct to discharge the first battery unit, and the second instruction is used to instruct to charge the second battery unit.

Optionally, the method further includes: continuously obtaining a difference between voltages of the first battery unit and the second battery unit, and when the difference between voltages of the first battery unit and the second battery unit is less than a second threshold, sending a third instruction to the battery management unit of the first battery unit and the battery management unit of the second battery unit, where the third instruction is used to instruct to stop voltage balancing, and the second threshold is less than the first threshold.

In another possible implementation, the state information includes a state of charge, and the target battery management unit includes a battery management unit of a third battery unit and a battery management unit of a fourth battery unit; and S603 includes:
when a difference between charges of the third battery unit and the fourth battery unit is greater than a third threshold, sending a first instruction to the battery management unit of the third battery unit, and/or sending a second instruction to the battery management unit of the fourth battery unit, where the first instruction is used to instruct to discharge the third battery unit, and the second instruction is used to instruct to charge the fourth battery unit.

Optionally, the method further includes: continuously obtaining a difference between charges of the third battery unit and the fourth battery unit, and when the difference between charges of the third battery unit and the fourth battery unit is less than a fourth threshold, sending a third instruction to the battery management unit of the third battery unit and the battery management unit of the fourth battery unit, where the third instruction is used to instruct to stop voltage balancing, and the fourth threshold is less than the third threshold.

S604: The target battery management unit performs voltage balancing for the battery unit according to the instruction.

Specifically, the target battery management unit controls, according to the first instruction, the battery unit to be discharged.

Alternatively, the target battery management unit controls, according to the second instruction, the battery unit to be charged.

Alternatively, the target battery management unit stops the discharging or charging of the battery unit according to the third instruction.

For specific implementations of the steps in this embodiment of this application, refer to the description of embodiments corresponding to FIG. 3 to FIG. 5, and details are not described herein again. The control method in this embodiment of this application can allow for the distributed power supply system to implement voltage balancing in addition to continuous power supply, achieving a high balancing efficiency.

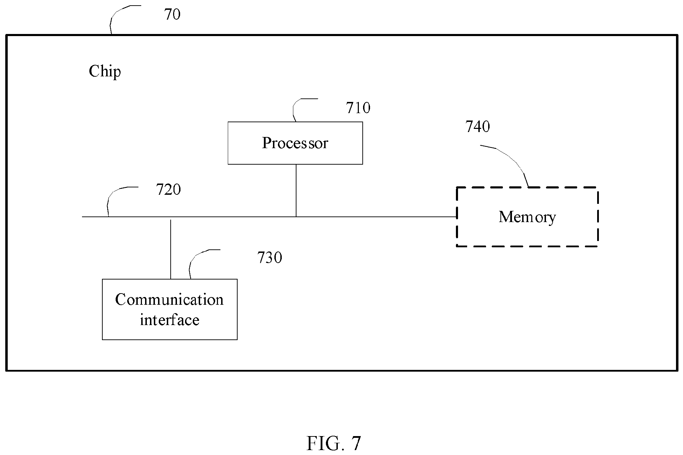

An embodiment of this application further provides a control apparatus. The control apparatus may perform the steps of the foregoing control method. The control apparatus may be a processor, a chip, or a chip system, or a virtual module running in the processor, the chip, or the chip system. For example, the control apparatus is a chip. FIG. 7 is a schematic diagram of a structure of a chip 70 according to an embodiment of this application. The chip 70 includes one or more (including two) processors 710 and a communication interface 730.

In a possible embodiment, the chip 70 shown in FIG. 7 further includes a memory 740. The memory 740 may include a read-only memory and a random access memory, and provide operation instructions and data to the processor 710. Apart of the memory 740 may further include a non-volatile random access memory (non-volatile random access memory, NVRAM).

In some implementations, the memory 740 stores the following elements: an executable module or a data structure, or a subset thereof, or an extended set thereof.

In this embodiment of the present invention, corresponding operations are performed by invoking the operation instructions stored in the memory 740 (the operation instructions may be stored in an operating system).

The processor 710 controls operations of the terminal device, and the processor 710 may also be referred to as a central processing unit (central processing unit, CPU). The memory 740 may include a read-only memory and a random access memory, and provide instructions and data to the processor 710. A part of the memory 740 may further include a non-volatile random access memory (non-volatile random access memory, NVRAM). For example, in an application, the memory 740, the communication interface 730, and the memory 740 are coupled together via a bus system 720. The bus system 720 may further include a power bus, a control bus, a status signal bus, and the like in addition to a data bus. However, for clarity of description, various buses are marked as the bus system 720 in FIG. 7.

The foregoing communication unit may be an interface circuit or a communication interface of the apparatus, and is configured to receive a signal from another apparatus. For example, when the apparatus is implemented as a chip, the communication unit is an interface circuit or a communication interface of the chip that is configured to receive a signal from or send a signal to another chip or apparatus.

The methods disclosed in the foregoing embodiments of the present invention may be applied to the processor 710, or implemented by the processor 710. The processor 710 may be an integrated circuit chip, and has a signal processing capability. In an implementation process, the steps in the foregoing method may be completed by a hardware integrated logic circuit or instructions in the form of software in the processor 710. The processor 710 described above may be a general-purpose processor, a digital signal processor (digital signal processing, DSP), an applicationspecific integrated circuit (application specific integrated circuit, ASIC), a field-programmable gate array (field-programmable gate array, FPGA) or another programmable logic device, a discrete gate or transistor logic device, or a discrete hardware component. The processor may implement or perform the methods, the steps, and logical block diagrams that are disclosed in embodiments of the present invention. The general-purpose processor may be a microprocessor, or the processor may be any conventional processor or the like. The steps of the method disclosed with reference to embodiments of the present invention may be directly executed and accomplished using a hardware decoding processor, or may be executed and accomplished using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 740, and the processor 710 reads information in the memory 740 and completes the steps in the foregoing method in combination with hardware of the processor 710.

In the foregoing embodiments, the instructions stored in the memory for execution by the processor may be implemented in the form of a computer program product. The computer program product may be written into the memory in advance, or may be downloaded and installed in the memory in the form of software.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD), or the like. An embodiment of this application further provides a computer-readable storage medium. The method described in the foregoing embodiments may be all or partially implemented by software, hardware, firmware, or any combination thereof. If the method is implemented in the software, the functions may be used as one or more instructions or codes and stored in the computer-readable medium or transmitted on the computer-readable medium. The computer-readable medium may include a computer storage medium and a communication medium, and may further include any medium that can transfer a computer program from one place to another. The storage medium may be any target medium accessible by a computer.

In a possible design, the computer-readable medium may include a RAM, a ROM, an EEPROM, a CD-ROM or another compact disc storage, a magnetic disk storage or another magnetic storage device, or any other medium that is used to carry or store required program code in the form of instructions or data structures and that is accessible by a computer. In addition, any connection is appropriately referred to as a computer-readable medium. For example, if a coaxial cable, a fiber-optic cable, a twisted pair, a digital subscriber line (DSL), or wireless technologies (such as infrared, radio, and microwave) are used to transmit software from a website, a server, or another remote source, the coaxial cable, the fiber-optic cable, the twisted pair, the DSL, or the wireless technologies such as infrared, radio, and microwave are included in the definition of the medium. The magnetic disks and optical discs used herein include a compact disc (CD), a laser disc, an optical disc, a digital versatile disc (DVD), a floppy disk, and a Blu-ray disc. The magnetic disks usually magnetically reproduce data, and the optical discs optically reproduce data using laser light. A combination thereof shall also fall within the scope of the computer-readable medium. The foregoing description illustrates merely specific implementations of the present invention, but the scope of protection of the present invention is not limited thereto. Any variation or replacement readily figured out by those skilled in the art within the technical scope disclosed in the present invention shall fall within the scope of protection of the present invention. Therefore, the scope of protection of the present invention shall be subject to the scope of protection of the claims.

The foregoing description illustrates merely specific implementations of the present invention, but the scope of protection of the present invention is not limited thereto. Any variation or replacement readily figured out by those skilled in the art within the technical scope disclosed in the present invention shall fall within the scope of protection of the present invention. Therefore, the scope of protection of the present invention shall be subject to the scope of protection of the claims.

The foregoing description illustrates merely specific implementations of the present invention, but the scope of protection of the present invention is not limited thereto. Any variation or replacement readily figured out by those skilled in the art within the technical scope disclosed in the present invention shall fall within the scope of protection of the present invention. Therefore, the scope of protection of the present invention shall be subject to the scope of protection of the claims.

## Claims

1. A distributed power supply system, comprising a battery management system and M battery units, wherein each of the battery units comprises a cell and a battery management unit, the battery management system communicates with the M battery management units of the M battery units in a wired or wireless manner, and M is an integer greater than 1;
any one of the battery management units is configured to obtain state information of a cell in a battery unit in which the any battery management unit is located;
the battery management system is configured to: communicate with the M battery management units to obtain M pieces of state information; determine a to-be-balanced target battery unit from the M battery units based on the M pieces of state information; and send an instruction to a target battery management unit provided in the target battery unit; and
the target battery management unit is configured to control, according to the instruction, voltage balancing for a cell in a battery unit in which the target battery management unit is located.

2. The distributed power supply system according to claim 1, wherein the state information comprises a voltage or a state of charge; and
the battery management system is specifically configured to determine, based on a difference between voltages or states of charge of the cells of the M battery units, a to-be-charged battery unit and/or a to-be-discharged battery unit from the M battery units, to obtain the target battery unit.

3. The distributed power supply system according to claim 2, wherein the target battery unit comprises a first battery unit and/or a second battery unit; and
the battery management system is specifically configured to: when a difference between voltages of the first battery unit and the second battery unit is greater than a first threshold, send a first instruction to a battery management unit of the first battery unit, and/or send a second instruction to a battery management unit of the second battery unit, wherein the first instruction is used to instruct to discharge the first battery unit, and the second instruction is used to instruct to charge the second battery unit;
the battery management unit of the first battery unit is specifically configured to control, according to the first instruction, the first battery unit to be discharged; and
the battery management unit of the second battery unit is specifically configured to control, according to the second instruction, the second battery unit to be charged.

4. The distributed power supply system according to claim 3, wherein
the battery management system is further specifically configured to continuously obtain a difference between voltages of the first battery unit and the second battery unit, and when the difference between voltages of the first battery unit and the second battery unit is less than a second threshold, send a third instruction to the battery management unit of the first battery unit and/or the battery management unit of the second battery unit, wherein the third instruction is used to instruct to stop voltage balancing, and the second threshold is less than the first threshold;
the battery management unit of the first battery unit is further specifically configured to stop the discharging of the first battery unit according to the third instruction; and
the battery management unit of the second battery unit is specifically configured to stop the charging of the second battery unit according to the third instruction.

5. The distributed power supply system according to claim 2, wherein the target battery unit comprises a third battery unit and/or a fourth battery unit; and
the battery management system is specifically configured to: when a difference between charges of the third battery unit and the fourth battery unit is greater than a third threshold, send a first instruction to a battery management unit of the third battery unit, and/or send a second instruction to a battery management unit of the fourth battery unit, wherein the first instruction is used to instruct to discharge the third battery unit, and the second instruction is used to instruct to charge the fourth battery unit;
the battery management unit of the third battery unit is specifically configured to control, according to the first instruction, the third battery unit to be discharged; and
the battery management unit of the fourth battery unit is specifically configured to control, according to the second instruction, the fourth battery unit to be charged.

6. The distributed power supply system according to claim 5, wherein
the battery management system is further specifically configured to continuously obtain a difference between charges of the third battery unit and the fourth battery unit, and when the difference between charges of the third battery unit and the fourth battery unit is less than a fourth threshold, send a third instruction to the battery management unit of the third battery unit and/or the battery management unit of the fourth battery unit, wherein the third instruction is used to instruct to stop voltage balancing, and the fourth threshold is less than the third threshold;
the battery management unit of the third battery unit is further specifically configured to stop the discharging of the third battery unit according to the third instruction; and
the battery management unit of the fourth battery unit is specifically configured to stop the charging of the fourth battery unit according to the third instruction.

7. The distributed power supply system according to any one of claims 1 to 6, wherein any one of the battery management units comprises a balancing control module, an energy dissipation resistor, and a switch; and
the balancing control module is configured to: obtain the state information of the cell of the battery unit in which the any battery management unit is located; send the state information of the cell of the battery unit in which the any battery management unit is located to the battery management system; receive the instruction from the battery management system; and control, according to the instruction, the switch to connect the energy dissipation resistor and the cell, so as to discharge the cell through the energy dissipation resistor, or control, according to the instruction, the switch to connect a replenishment power source and the cell, so as to charge the cell through the replenishment power source; wherein
the replenishment power source is connected to the cell in a wireless or wired manner.

8. The distributed power supply system according to any one of claims 1 to 7, further comprising a heat dissipation device, wherein the M battery management units are disposed in a heat dissipation path of the heat dissipation device, and the heat dissipation device is configured to dissipate heat from the M battery management units.

9. The distributed power supply system according to any one of claims 1 to 7, further comprising a liquid cooling pipe, wherein the M battery management units are closely fitted to the liquid cooling pipe, and the liquid cooling pipe is configured to dissipate heat from the M battery management units.

10. A control method, applied to a distributed power supply system, wherein the distributed power supply system comprises a battery management system and M battery units, each of the battery units comprises a cell and a battery management unit, the battery management system communicates with the M battery management units of the M battery units in a wired or wireless manner, and M is an integer greater than 1; and the method comprises:
obtaining, based on the M battery management units, state information of cells in respective battery units in which the M battery management units are located;
obtaining M pieces of state information based on communication between the battery management system and the M battery management units;
determining a to-be-balanced target battery unit from the M battery units based on the M pieces of state information;
sending an instruction to a target battery management unit provided in the target battery unit; and
controlling, according to the instruction, voltage balancing for a cell in the battery unit in which the target battery management unit is located.

11. The method according to claim 10, wherein the state information comprises a voltage or a state of charge; and the determining a to-be-balanced target battery unit from the M battery units based on the M pieces of state information comprises:
determining, based on a difference between voltages or states of charge of the cells of the M battery units, a to-be-charged battery unit and/or a to-be-discharged battery unit from the M battery units, to obtain the target battery unit.

12. The method according to claim 11, wherein the target battery unit comprises a first battery unit and/or a second battery unit; and the sending an instruction to a target battery management unit provided in the target battery unit comprises:
when a difference between voltages of the first battery unit and the second battery unit is greater than a first threshold, sending a first instruction to a battery management unit of the first battery unit, and/or sending a second instruction to a battery management unit of the second battery unit, wherein the first instruction is used to instruct to discharge the first battery unit, and the second instruction is used to instruct to charge the second battery unit; and
the controlling, according to the instruction, voltage balancing for a cell in the battery unit in which the target battery management unit is located comprises:
controlling, according to the first instruction, the first battery unit to be discharged; and
controlling, according to the second instruction, the second battery unit to be charged.

13. The method according to claim 12, wherein the controlling, according to the instruction, voltage balancing for a cell in the battery unit in which the target battery management unit is located further comprises:
continuously obtaining a difference between voltages of the first battery unit and the second battery unit, and when the difference between voltages of the first battery unit and the second battery unit is less than a second threshold, sending a third instruction to the battery management unit of the first battery unit and/or the battery management unit of the second battery unit, wherein the third instruction is used to instruct to stop voltage balancing, and the second threshold is less than the first threshold;
stopping the discharging of the first battery unit according to the third instruction; and
stopping the charging of the second battery unit according to the third instruction.

14. The method according to claim 11, wherein the target battery unit comprises a third battery unit and/or a fourth battery unit; and the sending an instruction to a target battery management unit provided in the target battery unit comprises:
when a difference between charges of the third battery unit and the fourth battery unit is greater than a third threshold, sending a first instruction to a battery management unit of the third battery unit, and/or sending a second instruction to a battery management unit of the fourth battery unit, wherein the first instruction is used to instruct to discharge the third battery unit, and the second instruction is used to instruct to charge the fourth battery unit; and
the controlling, according to the instruction, voltage balancing for a cell in the battery unit in which the target battery management unit is located comprises:
controlling, according to the first instruction, the third battery unit to be discharged; and
controlling, according to the second instruction, the fourth battery unit to be charged.

15. The method according to claim 14, wherein the controlling, according to the instruction, voltage balancing for a cell in the battery unit in which the target battery management unit is located further comprises:
continuously obtaining a difference between charges of the third battery unit and the fourth battery unit, and when the difference between charges of the third battery unit and the fourth battery unit is less than a fourth threshold, sending a third instruction to the battery management unit of the third battery unit and/or the battery management unit of the fourth battery unit, wherein the third instruction is used to instruct to stop voltage balancing, and the fourth threshold is less than the third threshold;
stopping the discharging of the third battery unit according to the third instruction; and
stopping the charging of the fourth battery unit according to the third instruction.

16. The method according to any one of claims 10 to 15, wherein any one of the battery management units comprises a balancing control module, an energy dissipation resistor, and a switch; and the obtaining, based on the M battery management units, state information of cells in respective battery units in which the M battery management units are located comprises:
obtaining state information of a cell in a battery unit in which the any battery management unit is located;
sending, to the battery management system, state information of a cell in a battery unit in which the any battery management unit is located;
receiving the instruction from the battery management system; and
controlling, according to the instruction, the switch to connect the energy dissipation resistor and the cell, so as to discharge the cell through the energy dissipation resistor, or controlling, according to the instruction, the switch to connect a replenishment power source and the cell, so as to charge the cell through the replenishment power source; wherein
the replenishment power source is connected to the cell in a wireless or wired manner.
